# EUROPÄISCHE PATENTANMELDUNG

(11) **EP 1 903 233 A1**
(43) Veröffentlichungstag der Anmeldung: **26.03.2008**
(21) Anmeldenummer: 07017921.3
(22) Anmeldetag: 13.09.2007
(51) Int. Cl.: F16D 13/64

(54) **Kupplungsscheibe**

(30) Priorität: 23.09.2006 DE 102006045026; 24.08.2007 DE 102007040015
(71) Anmelder: ZF Friedrichshafen AG, 88038 Friedrichshafen (DE)
(72) Erfinder: Stroh, Eugen, 97076 Würzburg (DE)

(57) **Zusammenfassung**

Die Erfindung betrifft eine Kupplungsscheibe (1), insbesondere für eine Kraftfahrzeugkupplung, die mindestens einen Belagträger (2) aufweist, an dem mindestens ein Reibbelag (3) mittels einer Nietverbindung (4) befestigt ist. Um den Halt des Reibbelags am Belagträger zu verbessern, sieht die Erfindung vor, dass die Nietverbindung (4) ein Federelement (5) umfasst, das im montierten Zustand der Nietverbindung (4) den Reibbelag (3) auf den Belagträger (2) presst.

## Beschreibung

Die Erfindung betrifft eine Kupplungsscheibe, insbesondere für eine Kraftfahrzeugkupplung, die mindestens einen Belagträger aufweist, an dem mindestens ein Reibbelag mittels einer Nietverbindung befestigt ist.

Die Kupplungsscheibe in einer Kupplungsvorrichtung überträgt über die Reibbeläge, die zwischen einer Schwungscheibe und einer Anpressplatte axial mit einer Kraft beaufschlagt werden, ein Drehmoment. Voraussetzung ist es dafür, dass die Reibbeläge mit dem Belagträger fest verbunden sind.

Es hängt (auch) von der Qualität dieser Verbindung ab, inwieweit die Kupplungsscheibe gegen Bersten resistent ist. Üblicherweise begrenzt das Bersten die maximale Drehzahl, mit der die Kupplungsscheibe betrieben werden kann. Weiterhin kann es zu radialen Verschiebungen der Reibbeläge infolge Fliehkraft kommen, was ebenfalls nachteilig ist und zu Ausfällen der Kupplungsscheibe führt.

Bekannt ist es, die Reibbeläge am Belagträger mittels einer Nietverbindung festzulegen. Die DE 37 18 147 A1 offenbart eine gattungsgemäße Kupplungsscheibe, bei der die Reibbeläge an der Belagfeder mittels Nieten befestigt sind. Die Nieten und insbesondere deren Setzköpfe bestehen hier aus Kunststoff, so dass der Setzkopf mit verschleißen kann und die Kupplungsscheibe so eine hohe Standzeit erreicht.

Aus der DE 32 30 037 A1 ist gleichermaßen eine Nietverbindung bekannt, mit der die Reibbeläge am Belagträger fixiert werden. Dort wird versucht, die Befestigung der Reibbeläge am Belagträger dadurch zu verbessern, dass eine geneigte Rampe vorgesehen ist, die in Richtung ihrer Niveaulinie zwei Teile gleicher Neigung aufweist, wobei die Teile zueinander in Querrichtung zur Niveaulinie verschoben sind. Dabei ist weiter vorgesehen, dass die verschobenen Teile der Rampe mittels eines begrenzten Spaltes voneinander getrennt sind, der quer zu der Niveaulinie verläuft.

Die vorbekannten Lösungen sind entweder teuer, insbesondere was die Fertigung der Kupplungsscheibe anbelangt, oder die führen noch nicht zu einer hinreichenden Fixierung der Reibbeläge am Belagträger. Nachteilig ist insbesondere, dass die im Niet wirkende Vorspannkraft oft nicht ausreichend ist, so dass eine hinreichende Festigkeit und Halterung des Reibbelags am Belagträger gegeben ist.

Der Erfindung liegt daher die **Aufgabe** zugrunde, eine Kupplungsscheibe der eingangs genannten Art so fortzubilden, dass diesbezüglich eine Verbesserung erzielt wird. Es soll also erreicht werden, dass die Festlegung der Reibbeläge am Belagträger in einfacher und damit kostengünstiger Weise erfolgen kann, wobei dennoch ein hoher Festigkeitsgrad der Nietverbindung erreichbar sein soll.

Die **Lösung** dieser Aufgabe durch die Erfindung ist dadurch gekennzeichnet, dass die Nietverbindung ein Federelement umfasst, das im montierten Zustand der Nietverbindung den Reibbelag auf den Belagträger presst.

Im Unterschied zur üblicherweise eingesetzten Nietverbindung ist diejenige gemäß der Erfindung also spezifisch mit einem Federelement versehen, das im montierten Zustand der Nietverbindung eine Presskraft zwischen Setzkopf und Schließkopf des Niets erzeugt. Es sei zur Klarstellung erwähnt, dass es sich bei diesem Federelement nicht um den Nietschaft selber handelt, der bekanntermaßen auch eine gewisse Federeigenschaft aufweist, sondern um ein zusätzliches Teil bzw. einen zusätzlichen Abschnitt der Nietverbindung.

Bevorzugt ist vorgesehen, dass das erfindungsgemäße Federelement an dem vom Belagträger entfernten axialen Ende der Nietverbindung angeordnet ist. Dies ist üblicherweise der Bereich des Setzkopfes des Niets.

Das Federelement kann dabei durch einen elastisch ausgebildeten Teil des Setzkopfes der Nietverbindung gebildet werden. In diesem Falle hat es sich bewährt, wenn vorgesehen ist, dass der Setzkopf im nicht montierten Zustand der Nietverbindung eine tellerfederartige Gestalt aufweist. Der Setzkopf hat dann also, solange er nicht in vorgespannter Weise montiert ist, eine schirmartige Form, d. h. einen konischen Abschnitt, der sich mit zunehmendem radialen Abstand von der Nietachse in Richtung des Schließkopfes erstreckt.

Eine alternative Ausgestaltung sieht vor, dass das Federelement als separates Bauteil ausgebildet ist, das unter dem Setzkopf der Nietverbindung angeordnet ist. Hierbei kann es sich um eine Tellerfeder oder um eine Ringfeder handeln, die vor der Montage des Niets unter den Setzkopf gelegt wird und durch Anlage an demselben vorgespannt wird.

Der Setzkopf der Nietverbindung ist bevorzugt in einer Ausnehmung im Reibbelag angeordnet. Die Ausnehmung kann eine zylindrische Form aufweisen, wobei die Auflagefläche der Ausnehmung für den Setzkopf der Nietverbindung eben ausgebildet ist und parallel zur Ebene des Belagträgers verläuft. Alternativ kann auch vorgesehen sein, dass die Ausnehmung eine zylindrische Form aufweist, wobei die Auflagefläche der Ausnehmung für den Setzkopf konisch ausgebildet ist.

Zwischen dem Belagträger, der Nietverbindung und dem Reibbelag kann zur weiteren Erhöhung der Festigkeit der Verbindung zwischen Reibbelag und Belagträger in radiale Richtung der Kupplungsscheibe eine formschlüssige Verbindung vorgesehen werden. Dabei sieht eine bevorzugte Ausgestaltung vor, dass der Außenumfang des Setzkopfes der Nietverbindung dem Durchmesser der Ausnehmung angepasst ist.

Eine spezielle Möglichkeit der Festlegung des Setzkopfes in der Ausnehmung besteht darin, dass am Außenumfang des Setzkopfes der Nietverbindung eine Anzahl sich radial zur Achse der Nietverbindung erstreckende Vorsprünge angeordnet ist. Der Außendurchmesser dieser Vorsprünge kann dabei geringfügig größer gewählt werden als der Durchmesser der Ausnehmung. Hierdurch liegt der Setzkopf besonders fest in der Ausnehmung im Reibbelag.

Der Nietschaft der Nietverbindung kann ferner in einer Bohrung im Belagträger sitzen, wobei der Außendurchmesser des Nietschaftes demjenigen der Bohrung entspricht. Auch hierdurch wird die formschlüssige Verbindung in radiale Richtung ermöglicht. Zwischen dem Durchmesser des Nietschaftes und dem Durchmesser der Bohrung im Belagträger liegt vorzugsweise Übergangspassung vor.

Der Setzkopf der Nietverbindung kann weiterhin Wellen und/oder Riefen aufweisen, die der Versteifung des Kopfes dienen.

Wenngleich das vorgeschlagene Prinzip grundsätzlich für alle Nietverbindungen eingesetzt werden kann, ist bevorzugt vorgesehen, dass der Niet aus Metall besteht.

Durch den Erfindungsvorschlag ergibt sich eine - besser - vorgespannte Nietverbindung, die über das Maß hinausgeht, die von herkömmlichen Nietverbindungen bekannt ist. Hierdurch wird eine höhere Berstdrehzahl der Kupplungsscheibe erreicht, da die Reibbeläge besser mit dem Belagträger verbunden sind. Auch wird das Verschieben der Reibbeläge auf dem Belagträger in radiale Richtung aufgrund von Fliehkräften besser verhindert, was die Übertragungssicherheit der Scheibe erhöht und so Ausfällen der Kupplungsscheibe vorbeugt.

Die Reibbeläge werden gemäß der Erfindung verbessert auf dem Belagträger gehalten, weil infolge des erfindungsgemäß vorgesehenen Federelements eine höhere Vorspannkraft in axialer Richtung des Niets erreichbar ist. Aufgrund dieser liegt eine Haltekraft vor, die sowohl die reibschlüssige Verbindung zwischen dem Nietkopf und dem Reibbelag als auch diejenige zwischen dem Reibbelag und dem Belagträger (Belagfeder) erhöht.

Die weiterbildungsgemäße formschlüssige Verbindung insbesondere in radiale Richtung zwischen Niet, Reibbelag und Belagträger erhöht weiterhin die Festigkeit der Anbindung des Reibbelags am Belagträger.

In der Zeichnung sind Ausführungsbeispiele der Erfindung dargestellt. Es zeigen:
- Fig. 1: eine Kupplungsscheibe einer Kraftfahrzeug-Kupplung im Radialschnitt,
- Fig. 2: die Anbindung des Reibbelags an der Belagfeder der Kupplungsscheibe mit einer Nietverbindung, vor der Fertigstellung der Nietverbindung, im Radialschnitt,
- Fig. 3: die Darstellung gemäß Fig. 2 nach der Fertigstellung der Nietverbindung,
- Fig. 4: ein Niet in perspektivischer Ansicht im Zustand nach der Fertigstellung der Nietverbindung,
- Fig. 5: die Anbindung des Reibbelags an der Belagfeder mit dem Niet gemäß Fig. 4 nach der Fertigstellung der Nietverbindung im Radialschnitt und
- Fig. 6: die Anbindung des Reibbelags an der Belagfeder der Kupplungsscheibe mit einer Nietverbindung gemäß einer alternativen Ausgestaltung der Erfindung nach der Fertigstellung der Nietverbindung.

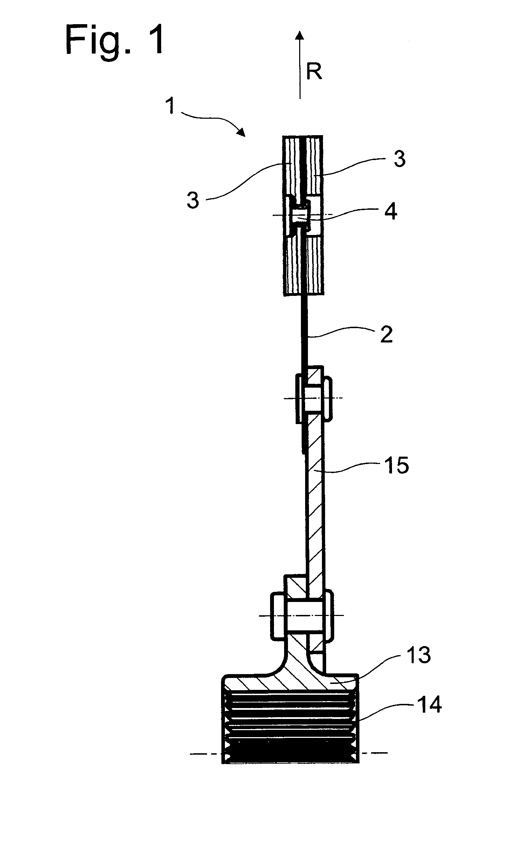

In Fig. 1 ist eine Kupplungsscheibe 1 im Radialschnitt zu sehen, die eine Nabe 13 mit Innenverzahnung 14 aufweist, an der ein Scheibengrundkörper 15 befestigt ist. Am Scheibengrundkörper 15 ist wiederum ein scheibenförmiger Belagträger 2 befestigt. Dieser trägt auf beiden Seiten Reibbeläge 3, die mit einer Nietverbindung 4 am Belagträger 2 fixiert sind. Insoweit sind Kupplungsscheiben bekannt.

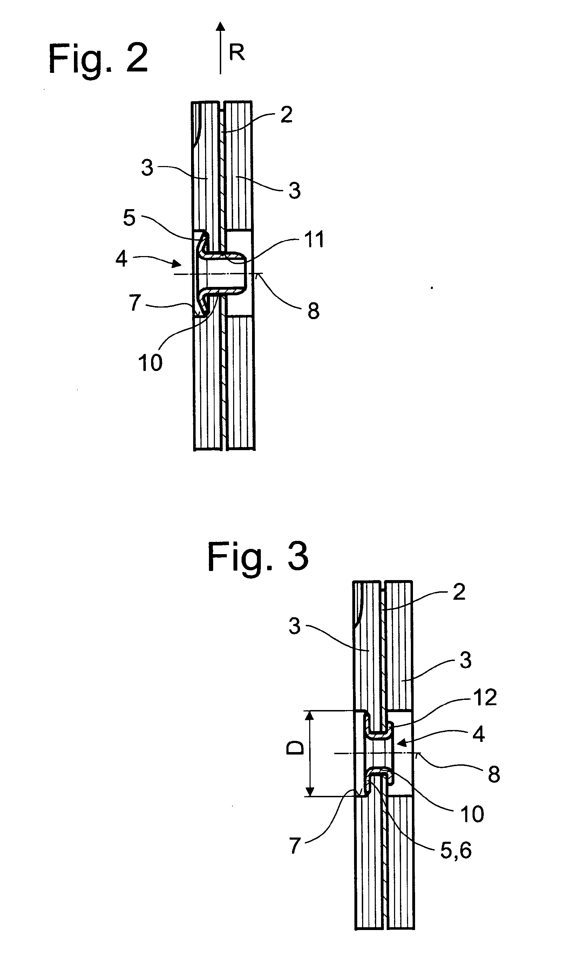

Details zu der Verbindung der Reibbeläge 3 an der Belagfeder 2 gehen aus den Figuren 2 und 3 hervor.

In Fig. 2 ist zu sehen, wie ein Niet 4 mit seinem hier noch nicht umgeformten Nietschaft 10 in eine zylindrische Ausnehmung 7 im Reibbelag 3 und weiter durch eine Bohrung 11 im Belagträger 2 in Richtung der Achse 8 des Niets 4 eingeschoben ist. Wie Fig. 2 zu entnehmen ist, ist der Setzkopf 6 des Niets 4 nicht herkömmlich ausgebildet, sondern er bildet ein Federelement 5 nach Art einer Tellerfeder. Der Setzkopf 6 ist hierfür schirmförmig ausgebildet; der radial äußere Bereich des Setzkopfes 6 bzw. des Federelements 5 weist in die Richtung, wo später der Schließkopf des Niets 4 geformt wird.

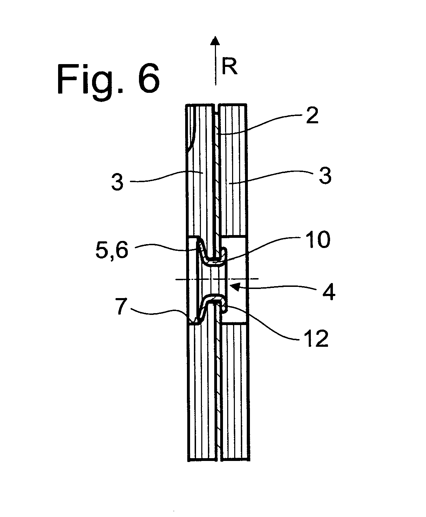

Der Setzkopf 5 des Niets 4 wird mit einem geeigneten Werkzeug vor dem Anformen des Schließkopfes in Fig. 2 von links nach rechts gepresst, bis er die Form einnimmt, die in Fig. 3 dargestellt ist. D. h. das Federelement 5 wird vorgespannt, bei es plan an der Auflagefläche anliegt, die die Ausnehmung 7 für den Setzkopf 6 bildet. Diese ist hier parallel zur Ebene der Belagfeder 2 orientiert (was nicht zwingend ist, s. Fig. 6). In der so vorgespannten Position wird in an sich bekannter Weise der Schließkopf 12, s. Fig. 3, durch Umformen des axialen Endbereichs des Nietschaftes 10 gebildet.

Das im montierten Zustand vorgespannte Federelement 5 sorgt dafür, dass stets eine hinreichende Anpresskraft zwischen dem Setzkopf 6 und dem Reibbelag 3 bzw. zwischen dem Reibbelag 3 und dem Belagträger 2 vorliegt, so dass eine Verschiebung des Reibbelags 3 relativ zum Belagträger 2 in radiale Richtung R alleine schon aufgrund Reibschluss verhindert wird.

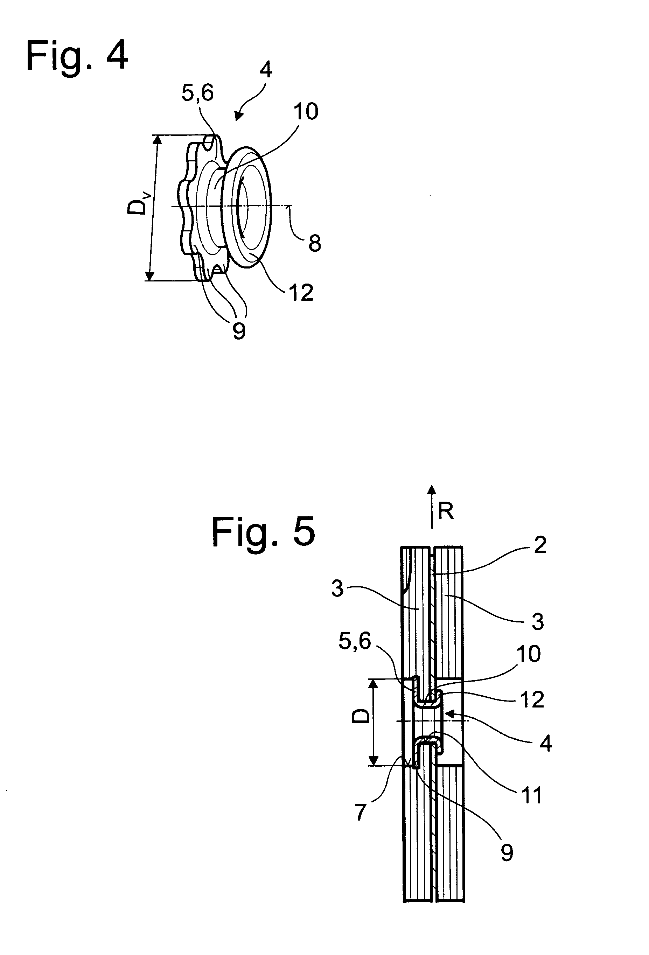

Zusätzlich kann die Befestigung des Reibbelags 3 am Belagträger 2 weiter verstärkt werden, indem eine formschlüssige Verbindung in radiale Richtung R vorgesehen wird. Eine solche Lösung ist in den Figuren 4 und 5 zu sehen.

Hier ist der Setzkopf 6 des Niets 4 (der in Fig. 4 isoliert, jedoch im eingebauten Zustand skizziert ist), der gleichzeitig wieder als Federelement 5 dient, mit einer Anzahl Vorsprüngen 9 versehen, die über den Umfang des Setzkopfes 6 angeordnet sind und dem Setzkopf 6 ein sternförmiges Aussehen verleihen. Der Außendurchmesser Dᵥ der Vorsprünge 9 ist dabei geringfügig größer als der Durchmesser D der Ausnehmung 7 im Reibbelag 3. Dies hat zur Folge, dass sich beim Einführen bzw. Eindrücken des Niets 4 in die Ausnehmung 7 die Vorsprünge 9 leicht in die zylindrische Bohrungsfläche der Ausnehmung 7 eindrücken und dafür sorgen, dass der Niet 4 relativ zum Reibbelag 3 in radiale Richtung R formschlüssig festliegt.

Der Nietschaft 10 des Niets 4 ist relativ zur Bohrung 11 im Belagträger 2 so toleriert, dass hier ebenfalls eine radiale Festlegung gegeben ist, wozu eine Übergangspassung zwischen dem Außendurchmesser des Nietschaftes 10 und dem Durchmesser der Bohrung 11 vorgesehen werden kann. Nach dem Anformen des Schließkopfes 12 liegt damit der Reibbelag 3 relativ zur Belagfeder 2 in radiale Richtung R formschlüssig fest.

In Fig. 6 ist dargestellt, dass auch eine am axialen Ende der Ausnehmung 7 angeformte konische Anlagefläche für das Federelement 5 bzw. den Setzkopf 6 vorgesehen werden kann. Auch hier wird bei der Montage der Reibbeläge 3 am Belagträger 2, d. h. bei der Herstellung der Nietverbindung, der Niet 4 mit einem geeigneten Werkzeug (nicht dargestellt) an die konische Anlagefläche der Ausnehmung 7 gepresst, bevor der Schließkopf 12 angeformt wird. Dadurch kommt auch wieder der Anpresseffekt des Federelements 5 zur Wirkung, wobei hier das tellerfederartige Federelement 5 so ausgeführt ist, dass beim Anpressen des Niets 4 an die Auflagefläche der Ausnehmung 7 ein analoges Verformen erfolgt, wie es sich aus der Zusammenschau der Figuren 2 und 3 ergibt. Im nicht montierten Zustand ist das Federelement 5 bzw. der Setzkopf 6 also stärker geneigt als es dem Kegelwinkel der Auflage in der Ausnehmung 7 entspricht.

Nicht dargestellt ist, dass das Federelement 5 bzw. der Setzkopf 6 mit Wellen (entlang des Umfang oder radial verlaufend) bzw. mit Riefen versehen sein kann, um die Steifigkeit des Elements zu erhöhen.

Die Berstfestigkeit der Kupplungsscheibe 1 und der Widerstand gegen ein radiales Verschieben der Reibbeläge 3 gegenüber der Belagfeder 2 wird damit wesentlich erhöht und damit das Betriebsverhalten der Kupplungsscheibe verbessert. Dennoch verursacht die Umsetzung des erfindungsgemäßen Vorschlags keine nennenswert höheren Kosten.

### Bezugszeichenliste

- 1: Kupplungsscheibe
- 2: Belagträger
- 3: Reibbelag
- 4: Nietverbindung
- 5: Federelement
- 6: Setzkopf
- 7: Ausnehmung
- 8: Achse der Nietverbindung
- 9: Vorsprung
- 10: Nietschaft
- 11: Bohrung im Belagträger
- 12: Schließkopf
- 13: Nabe
- 14: Innenverzahnung
- 15: Scheibengrundkörper

- R: radiale Richtung
- D: Durchmesser der Ausnehmung
- Dᵥ: Außendurchmesser des Vorsprungs

## Patentansprüche

1. Kupplungsscheibe (1), insbesondere für eine Kraftfahrzeugkupplung, die mindestens einen Belagträger (2) aufweist, an dem mindestens ein Reibbelag (3) mittels einer Nietverbindung (4) befestigt ist,
**dadurch gekennzeichnet,**
**dass** die Nietverbindung (4) ein Federelement (5) umfasst, das im montierten Zustand der Nietverbindung (4) den Reibbelag (3) auf den Belagträger (2) presst.

2. Kupplungsscheibe nach Anspruch 1, **dadurch gekennzeichnet, dass** das Federelement (5) an dem vom Belagträger (2) entfernten axialen Ende der Nietverbindung (4) angeordnet ist.

3. Kupplungsscheibe nach Anspruch 1 oder 2, **dadurch gekennzeichnet, dass** das Federelement (5) durch einen elastisch ausgebildeten Teil des Setzkopfes (6) der Nietverbindung (4) gebildet wird.

4. Kupplungsscheibe nach Anspruch 3, **dadurch gekennzeichnet, dass** der Setzkopf (6) im nicht montierten Zustand der Nietverbindung (4) eine tellerfederartige Gestalt aufweist.

5. Kupplungsscheibe nach Anspruch 1 oder 2, **dadurch gekennzeichnet, dass** das Federelement (5) als separates Bauteil ausgebildet ist, das unter dem Setzkopf (6) der Nietverbindung (4) angeordnet ist.

6. Kupplungsscheibe nach Anspruch 5, **dadurch gekennzeichnet, dass** das Federelement (5) eine Tellerfeder oder eine Ringfeder ist.

7. Kupplungsscheibe nach einem der Ansprüche 1 bis 6, **dadurch gekennzeichnet, dass** der Setzkopf (6) der Nietverbindung (4) in einer Ausnehmung (7) im Reibbelag (3) angeordnet ist.

8. Kupplungsscheibe nach Anspruch 7, **dadurch gekennzeichnet, dass** die Ausnehmung (7) eine zylindrische Form aufweist, wobei die Auflagefläche der Ausnehmung (7) für den Setzkopf (6) der Nietverbindung (4) eben ausgebildet ist und parallel zur Ebene des Belagträgers (2) verläuft.

9. Kupplungsscheibe nach Anspruch 7, **dadurch gekennzeichnet, dass** die Ausnehmung (7) eine zylindrische Form aufweist, wobei die Auflagefläche der Ausnehmung (7) für den Setzkopf (6) der Nietverbindung (4) konisch ausgebildet ist.

10. Kupplungsscheibe nach einem der Ansprüche 1 bis 9, **dadurch gekennzeichnet, dass** zwischen dem Belagträger (2), der Nietverbindung (4) und dem Reibbelag (3) in radiale Richtung (R) der Kupplungsscheibe (1) eine formschlüssige Verbindung vorliegt.

11. Kupplungsscheibe nach einem der Ansprüche 8 bis 10, **dadurch gekennzeichnet, dass** der Außenumfang des Setzkopfes (6) der Nietverbindung (4) dem Durchmesser (D) der Ausnehmung (7) angepasst ist.

12. Kupplungsscheibe nach Anspruch 11, **dadurch gekennzeichnet, dass** am Außenumfang des Setzkopfes (6) der Nietverbindung (4) eine Anzahl sich radial zur Achse (8) der Nietverbindung (4) erstreckende Vorsprünge (9) angeordnet ist.

13. Kupplungsscheibe nach Anspruch 12, **dadurch gekennzeichnet, dass** der Außendurchmesser (Dᵥ) der Vorsprünge (9) geringfügig größer ist als der Durchmesser (D) der Ausnehmung (7).

14. Kupplungsscheibe nach einem der Ansprüche 1 bis 13, **dadurch gekennzeichnet, dass** der Nietschaft (10) der Nietverbindung (4) in einer Bohrung (11) im Belagträger (2) sitzt, wobei der Durchmesser des Nietschaftes (10) demjenigen der Bohrung (11) entspricht.

15. Kupplungsscheibe nach Anspruch 14, **dadurch gekennzeichnet, dass** zwischen dem Durchmesser des Nietschaftes (10) und dem Durchmesser (D) der Bohrung (11) im Belagträger (3) Übergangspassung vorliegt.

16. Kupplungsscheibe nach einem der Ansprüche 1 bis 15, **dadurch gekennzeichnet, dass** der Setzkopf (6) der Nietverbindung (4) Wellen und/oder Riefen aufweist.

17. Kupplungsscheibe nach einem der Ansprüche 1 bis 16, **dadurch gekennzeichnet, dass** die Nietverbindung (4) aus Metall besteht.
